Europäisches Patentamt

European Patent Office

Office européen des brevets

(19)

(11) Veröffentlichungsnummer: **0 092 215 B1**

## (12) EUROPÄISCHE PATENTSCHRIFT

(45) Veröffentlichungstag der Patentschrift:
05.02.86

(21) Anmeldenummer: 83103732.0

(22) Anmeldetag: 18.04.83

(51) Int. Cl.⁴: **H 04 B 17/02, H 03 M 13/00**

(54) Regenerator für digitale Signale im AMI-Code mit einem Coderegelverletzungsprüfer.

(30) Priorität: 20.04.82 DE 3214555

(43) Veröffentlichungstag der Anmeldung:
26.10.83 Patentblatt 83/43

(45) Bekanntmachung des Hinweises auf die Patenterteilung:
05.02.86 Patentblatt 86/6

(84) Benannte Vertragsstaaten:
AT BE CH DE FR GB IT LI LU NL SE

(56) Entgegenhaltungen:
EP - A - 0 044 554
EP - A - 0 044 555
EP - A - 0 047 683
DE - B - 1 299 700
US - A - 3 048 819

PATENTS ABSTRACTS OF JAPAN, Band 2, Nr. 51, 12.
April 1978, Seite 954 E 78
CONFERENCE RECORD, 1978 NATIONAL
TELECOMMUNICATIONS CONFERENCE, Band 2, IEEE
Katalog Nr. 78CH1354-0 CSCB, Seiten 30.5.1-30.5.7,
New York, USA T.E. CLARK et al.: "A low power
miniature repeater for T1 transmission"

(73) Patentinhaber: Siemens Aktiengesellschaft, Berlin und
München Wittelsbacherplatz 2, D-8000 München 2 (DE)

(72) Erfinder: Meyer, Fritz, Dr.-Ing., Wifostrasse 5,
D-8034 Germering (DE)

## Beschreibung

Die Erfindung betrifft einen Regenerator für digitale Signale mit einem eingangsseitigen Schmitt-Trigger und einem an dessen Ausgang angeschalteten Zeitentscheider.

Ein Regenerator der eingangs erwähnten -art ist aus der DE-A- 27 08 339 bekannt. Dieser bekannte Regenerator ist für Schaltgeschwindigkeiten im Subnanosekundenbereich vorgesehen und enthält die Kombination eines basisgekoppelten Schmitt-Triggers mit einem basisgekoppelten D-Flipflop.

In der US-A-3 048 819 ist ein Coderegelverletzungsprüfer für im AMI-Code vorliegende digitale Signale beschrieben. Beim AMI-Code handelt es sich um einen pseudoternären Code, bei dem der eine Logikpegel dem Nullpegel und der andere Logikpegel dem +1 bzw. -1-Pegel entspricht, wobei auf einen positiven Impuls immer ein negativer und umgekehrt folgen muß.

Ein unabhängig von einem Regenerator aufgebauter Coderegelverletzungsprüfer für im AMI-Code vorliegende digitale Signale ist auch in der EP-A-0 092 216 beschrieben, die auf eine zeitgleiche Parallelanmeldung zur vorliegenden Anmeldung zurückgeht.

Die Betriebsüberwachung von Übertragungsstrecken für digitale Signale mit den vorstehend geschilderten Regeneratoren kann dadurch erfolgen, daß im wenigstens einigen der Regeneratoren eine Überwachungseinrichtung vorgesehen ist. Diese Überwachungseinrichtung kann so ausgebildet sein, daß sie die laufende digitale Summe der digitalen Signale überwacht, es kann auch die Einhaltung der bei der Bildung der digitalen Signale verwendeten Coderegel überwacht werden. Die Entscheidung für eine dieser Möglichkeiten hängt davon ab, welcher Aufwand mit der entsprechenden Realisierung verbunden ist, welche Leistungsaufnahme der Coderegelverletzungsprüfer als Teil des ferngespeisten Regenerators haben darf, welche einfachen Möglichkeiten bestehen, die Funktionsfähigkeit des Coderegelverletzungsprüfers zu überwachen und welche Schrittgeschwindigkeiten auftreten.

Die Aufgabe bei der vorliegenden Erfindung besteht darin, einen Regenerator der eingangs erwähnten Art so weiterzubilden, daß sich eine einfache, leicht zu integrierende, wenig Strom aufnehmende und einfach zu überwachende Möglichkeit zur Überprüfung der übertragenen digitalen Signale im AMI-Code ergibt und ein Einsatz auch bei Schrittgeschwindigkeiten von einigen 100 Mbit/s möglich ist.

Die Aufgabe wird gemäß der Erfindung dadurch gelöst, daß die digitalen Signale im AMI-Code vorliegen und daß zur Betriebsüberwachung ein Coderegelverletzungsprüfer für den AMI-Code vorgesehen ist, daß der Coderegelverletzumgsprüfer einen, durch ein gegenüber dem Eingangssignal um eine Schrittperiode verzögertes Schmitt-Triggerausgangssignal gesteuerten Umschalter und zwei von diesem aktivierte Schwellenwertvergleicher enthält, von denen der eine einen Vergleich des Eingangssignals mit der unteren Schwellenspannung und der andere mit der oberen Schwellenspammung des Schmitt-Triggers durchführt, daß mit dem Signaleingang des Regenerators sowohl ein Eingang des Schmitt-Triggers als auch ein erster Eingang des Coderegelverletzumgsprüfers verbunden sind, daß ein zweiter Eingang des Coderegelverletzungsprüfers an den auf den Schmitt-Triggerausgang folgenden Weg für die digitalen Signale über ein Verzögerungsglied angeschlossen ist und daß am Ausgang des Coderegelverletzumgsprüfers bei festgestellten Coderegelverletzungen jeweils ein entsprechendes Signal auftritt.

Eine bevorzugte Weiterbildung des erfindungsgemäßen Regenerators ergibt sich dadurch, daß der Coderegelverletzungsprüfer einen ersten Transistor und einen zweiten Transistor enthält, deren Emitteranschlüsse miteinander und mit einer Stromquelle verbunden sind, daß der Basisanschluß des ersten Transistors den zweiten Eingang des Coderegelverletzungsprüfers bildet, daß der Basisanschluß des zweiten Transistors mit einer Referenzspannungsquelle und der Kollektoranschluß dieses Transistors mit den zusammengeführten Emitteranschlüssen eines dritten und eines vierten Transistors verbunden ist, daß der Kollektoranschluß des ersten Transistors mit den zusammengeführten Emittsranschlüssen eines fünften und eines sechsten Transistors verbunden ist, daß die zusammengeführten Basisanschlüsse des dritten und des fünften Transistors den ersten Eingang des Coderegelverletzungsprüfers bilden, daß die Kollektoranschlüsse des vierten und des fünften Transistors miteinander, mit einem Ausgangsanschluß und über einen ersten Widerstand mit Pezugspotential verbunden sind, daß die Kollektoranschlüsse des dritten und des sechsten Transistors miteinander, mit einem weiteren Ausgangsanschluß und über einen zweiten Widerstand mit Bezugspotential verbunden sind, daß der Pasisanschluß des vierten Transistors mit einer quelle für eine Spannung entsprechend der negativen Schaltschwelle des verwendeten Schmitt-Triggers und der Basisanschluß des sechsten Transistors mit einer Quelle für eine Spannung entsprechend der positiven Schaltschwelle des SchmittTriggers verbunden sind. Der Vorteil dieser Weiterbildung des erfindungsgemäßen Regenerators liegt neben dem geringeren Schaltungsaufwand und der leichten Integrierbarkeit in dem geringen Stromverbrauch, der neben einer geringen Fernspeiseleistung auch eine hohe Zuverlässigkeit ergibt.

Zweckmäßige Weiterbildungen des erfindungsgemäßen Regenerators sind in den Patentansprüchen 3 bis 8 näher beschrieben.

Die Erfindung soll im folgenden anhand der Zeichnung näher erläutert werden. In der Zeichnung zeigt

Fig. 1 das Blockschaltbild des erfindungsgemäßen Regenerators,

Fig. 2 ein Impulsdiagramm zur Fig. 1 und

Fig. 3 ein detailliertes Schaltbild des im Regenerator nach Fig. 1 enthaltenen Coderegelverletzungsprüfers.

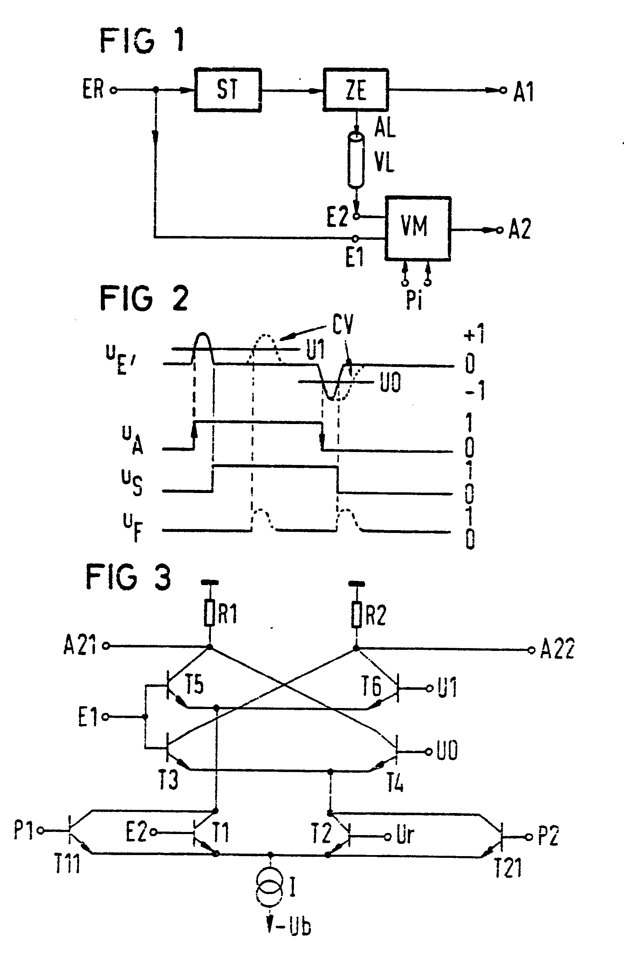

In der Fig. 1 ist mit ER der Eingang des Regenerators bezeichnet, an den der Eingang eines als Amplitudenentscheider wirkenden Schmitt-Triggers ST und der erste Eingang E1 eines Coderegelverletzungsprüfers VM angeschlossen sind. An den Ausgang des Schmitt-Triggers ist der

**0 092 215**

Zeitentscheider ZE angeschlossen, an dessen Ausgang A1 die digitalen Signale amplituden- und zeitmäßig regeneriert entnehmbar sind. An einem weiteren Ausgang AL des Zeitentscheiders ist über ein Verzögerungsglied VL, das im Hinblick auf einen einfachen Aufbau als Leitung ausgeführt werden kann, im vorliegenden Falle aber wegen der leichten Integrierbarkeit mittels in Kettegeschalteter Inverterstufen realisiert wurde, der zweite Eingang E2 des Coderegelverletzungsprüfers angeschlossen. Der Coderegelverletzungsprüfer VM enthält zusätzlich Eingänge Pi für Prüfimpulse und einen Ausgang, der den Ausgang A2 des Regenerators für ein Überwachungsaignal darstellt. Der Regenerator nach der Fig. 1 ist zur Verarbeitung von AMI-codierten digitalen Signalen vorgesehen.

Zur Erläuterung der Funktion des Regenerators nach der Fig. 1 wird das Impulsdiagramm nach der Fig. 2 herangezogen, das in der obersten, mit $u_E$ bezeichneten Zeile das am Eingang ER des Regenerators anstehende Eingangssignal zeigt. In der darunterliegenden Zeile, die mit $u_A$ bezeichnet ist, ist das Ausgangssignal des Schmitt-Triggers ST dargestellt. Entsprechend der Funktion des Schmitt-Triggers wechselt dessen Ausgangssignal vom logischen Null- auf den logischen Einspegel, sofern das Eingangssignal $u_E$ den oberen Schwellenwert U1 des Schmitt-Triggers überschreitet. Entsprechend wechselt das Ausgangssignal des Schmitt-Triggers von 1 auf Null, wenn ein negativer Impuls des Eingangssignals $u_E$ die untere, im negativen Spannungsbereich liegende Schaltschwelle UO des Schmitt-Triggers unterschreitet. Der Abstand der Schwellenwerte U1 - UO entspricht dabei der Hysterese des Schmitt-Triggers. Der Schmitt-Trigger wirkt dabei also als pseudoternärer Amplitudenentscheider, der im Differenz-Binärcode vorliegende Ausgangssignale erzeugt. Diese Ausgangssignale werden einem Zeitentscheider zugeführt, bei dem es sich beispielsweise um ein D-Flipflop handeln kann, und von diesem hinsichtlich ihrer Lage im Zeitraster regeneriert, die Codierung im Differenz-Binärcode ergibt dabei eine vorteilhaft geringe Fehlerfortpflanzung.

Die Eingangs- und Ausgangssignale des Schmitt-Triggers werden zur Betriebsüberwachung dem Coderegelverletzungsprüfer VM zugeführt, in dem die Einhaltung der AMICoderegel überwacht wird. Die Ausgangsspannung $u_A$ des Schmitt-Triggers wird dabei über einen Teil des Zeitentscheiders ZE und über ein Verzögerungsglied VL so verzögert, daß die Summe der Laufzeiten von Schnitt-Trigger, Verzögerungsglied und anteiliger Laufzeit im Zeitentscheider einer Schrittperiode der digitalen Signale entspricht. Das verzögerte Signal liegt am zweiten Eingang E2 des Coderegelverletzungsprüfers VM an und wird in weiteren auch als Steuersignal $u_S$ bezeichnet; es ist in der dritten Zeile der Fig. 2 dargestellt.

Durch einen ersten positiven Impuls im Eingangssignal $u_E$ schaltet also der Schmitt-Trigger in den Zustand $u_A$ = 1. Unter der Voraussetzung, daß die Impulsdauer der Schrittperiode bzw. der Bitdauer entspricht, wird unmittelbar nach dem Abklingen des positiven Eingangsimpulses auch das Steuersignal $u_S$ = 1. Dadurch wird der Coderegelverletzungsprüfer für das Auffinden weiterer positiver Impulse im Eingangssignal $u_5$, die der Coderegel nicht entsprechen würden, aktiviert. Ein weiterer mit CV bezeichneter positiver Impuls führt damit zum Auftreten eines Fehlersignals $u_F$ am Ausgang A2 des Coderegelverletzungsprüfers. Der Prüfzustand für positive Impulse dauef bis zum Ende des ersten negativen Eingangsimpulses an, durch den der Schmitt-Trigger auf das Ausgangssignal $u_A$ = O umgeschaltet wird. Damit ist es also auch möglich, mehrere aufeinanderfolgende Fehlerimpulse unabhängig voneinander zu erkennen und beispielsweise zu zählen. Eine Schrittperiode nach dem Auftreten des ersten negativen Eingangsimpulses wird das Steuersignal $u_S$ = 0 und damit der Coderegelverletzungsprüfer so gesteuert, daß er bei nachfolgenden weiteren negativen Eingangsimpulsen jeweils ein Fehlersignal $u_F$ = 1 abgibt. Im vorliegenden Falle wurde eine Verbreiterung des negativen Fingangsimpulses als Coderegelverletzung CV dargestellt und erkannt, die Eingangsimpulse müssen also zur Fehlererkennung nicht erst auf Null abgeklungen sein.

An den Ausgang A2 ist im vorliegenden Falle eine Einrichtung zur Übertragung von Telemetriedaten angeschlossen, durch die die Fehlerimpulse zu einer auswertenden Endstelle übermittelt werden.

Fehlerimpulse können nicht nur das Ergebnis von Coderegelverletzungen im digitalen Signal sein, ein Defekt beispielsweise in Schmitt-Trigger ST oder in dem vom Steuersignal durchlaufenen Teil des Zeitentscheiders sowie eine fehlerhafte Funktion im Coderegelprüfer selbst können ebenfalls zur Erzeugung von Fehlerinpulsen führen. Zur Abgrenzung von Fehlern, die in Übertragungsweg für die digitalen Sig ale entstanden sind, von den Fehlern, die in Coderegelprüfer selbst entstehen, ist eine gelegentliche Überprüfung des Coderegelverletzungsprüfers VM notwendig. Zu diesem Zweck verfügt der Coderegelverletzungsprüfer über Eingänge Pi, an die Prüfimpulse angelegt werden kömnen. Die Prüfimpulse können ebenfalls über die für die Übertragung der Fehlerimpulse vorgesehene Telemetrieeinrichtung den einzelnen Regeneratoren zugeführt werden.

Für die Einkopplung von Prüfimpulsen bestehen mehrere Möglichkeiten; die eine Möglichkeit besteht darin, Prüfimpulse so in den Coderegelverletzungsprüfer einzukoppeln, daß das Signal am Eingang E1 ständig unter dem unteren Schwellenwert UO des Schmitt-Triggers bleibt. In diesem Fall wird für die Dauer, während der das Steuersignal $u_S$ = 0 ist, also zwischen dem Auftreten eines negativen Eingangsimpulses und eines positiven Eingangsimpulses, ein Fehlerimpuls ausgelöst.

Entsprechend können die Prüfimpulse so eingekoppelt werden, daß das Signal an Eingang E1 während der Impulssignaldauer ständig über dem oberen Schwellenwert U1 bleibt. Nun wird für die Dauer, während der das Steuersignal $u_S$ = 1 ist, also nach dem Auftreten eines positiven Eingangsimpulse, ein Fehlerimpuls ausgelöst.

Eine weitere Möglichkeit der Einkopplung von Prüfimpulsen besteht darin, das Steuersignal $u_S$ = 0 zu setzen. Dann erzeugt jeder negative Eingangsimpuls einen Fehlerimpuls. Ebenso kann das Steuersignal $u_S$ = 1 gesetzt werden, so daß dann jeder positive Eingangssignalimpuls bei korrekter Funktion des Coderegelverletzungsprüfers einen Fehlerimpuls erzeugt. Diese Überwachung des Coderegelverletzungsprüfers

3

ist, wie dies für einen störungsfreien Betrieb zu fordern ist, unabhängig von der Übertragung oder Regenerierung der digitalen Signale in Schmitt-Trigger und Zeitentscheider.

Die Verbindung des Ausgangs AL im Zeitentscheider mit dem Signalwegafür die digitalentSignale kann an verschiedenen Stellen des Zeitentscheiders erfolgen. Im Hinblick darauf, daß das Verzögerungsglied VL, beispielsweise eine Verzögerungsleitung, nur eine geringe Signalverzögerung aufbringen muß, kann der Ausgang AL beispielsweise mit dem Ausgang A1 des Zeitentscheiders verbunden sein. Dies hat zur Folge, daß die Umschaltflanken im Steuersignal $u_S$ genau im Zeitraster liegen, so daß die Genauigkeit im Coderegelverletzungsprüfer VM wegen der sicheren Schwellwertentscheidung besonders hoch ist. Außerdem ist in diesem Falle auch der gesamte Zeitentscheider mit in die Überwachung einbezogen. Die Verzögerung des Signals kann dann bei Übertragungsgeschwindigkeiten von einigen 100 MBaud am Ausgang des Zeitentscheiders bereits größer als die vorgesehene Dauer von einer Bitperiode sein. Dann ist das Verzögerungsglied VL nicht dem Eingang E2, sondern dem Eingang E1 vorzuschalten. Es ist aber auch möglich, den Ausgang AL mit dem Eingang des Zeitentscheiders zu verbinden; dies ist besonders zweckmäßig, wenn als Verzögerungsglied VL ein Gatter verwendet wird, dessen Signalverzögerung zusammen mit der Laufzeit durch den Schmitt-Trigger ST etwa einer Bitdauer der zu übertragenden digitalen Signale entspricht.

In der Fig. 3 ist die detaillierte Schaltung des Coderegelverletzungsprüfers VM nach der Fig. 1 angegeben. Der Coderegelverletzungsprüfer nach der Fig. 3 besteht im Prinzip aus drei geeignet zusammengeschalteten emittergekoppelten Differenzverstärkern, von denen der erste Differenzverstärker als gesteuerter Umschalter för die beiden anderen Differenzverstärker dient, die als Schwellenwertvergleicher geschaltet sind. Der Umschalter wird von dem Ausgangssignal des Schmitt-Triggers gesteuert, das gegenüber dem Eingangssignal um eine Schrittperiode verzögert ist. Der eine Schwellenwertvergleicher erhält eine Referenzspannung entsprechend der unteren Schwellenspannung U0 des SchmittTriggers, während am anderen Schweilenwertvergleicher eine Referenzspannung U1 des Schmitt-Triggers anliegt.

Der erste Differenzverstärker wird durch die beiden Transistoren T1 und T2 gebildet, der zweite Differenzverstärker durch die Transistoren T3 und T4 und der dritte Differenzverstärker durch die Transistoren T5 und T6. Die Emitteranschlüsse der beiden Transistoren T1 und T2 sind dabei miteinander und über eine Stromquelle I mit einer negativen Betriebsspannung -Ub verbunden. Der Basisanschluß des ersten Transistors T1 stellt den zweiten Eingang E2 des Coderegelverletzungsprüfers dar, während der Basisanschluß des Transistors T2 mit einer Referenzspannungsquelle Ur verbunden ist. Die Basisanschlüsse der Transistoren T3 und T5 sind miteinander und mit einem Anschluß verbunden, der dem Eingang El des Coderegelverletzungsprüfers entsprechend der Fig. 1 darstellt. Der Basisanschluß des Transistors T4 ist mit einer Quelle verbunden, die eine Spannung entsprechend der unteren Umschaltschwelle U0 des Schmitt-Triggers ST abgibt, während der Basisanschluß des Transistors T6 mit einer Quelle verbunden ist, die eine Spannung entsprechend der oberen Umschaltschwelle U1 des Schmitt-Triggers ST abgibt. Der Kollektoranschluß des ersten Transistcrs Tl ist mit den zusammengeführten Emitteranschlüssen der Transistoren T5 und T6 verbunden, während der Kollektoranschluß des zweisen Transistors T2 mit den zusammengeführten Emitteranschlüssen der Transistoren T3 und T4 verbunden ist. Die Kollektoranschlüsse des vierten und des fünften Transistors T4,T5 sind miteinander, mit einem ersten Ausgangsanschluß A21 und über einen ersten Widerstand R1 mit Bezugspotential verbunden. Die Kollektoranschlüsse des dritten und des sechsten Transistors T3, T6 sind ebenfalls miteinander, mit einem weiteren Ausgangsanschluß A22 sowie über einen zweiten Widerstand R2 mit Bezugspotential verbunden. Die Ausgangsanschlüsse A2l und A22 führen jeweils zueinander die inversen Impulse und können deshalb wahlweise als Ausgangsanschluß A2 entsprechend Fig. 1 dienen.

Zur Erhöhung der Umschaltgeschwindigkeit kann anstelle der Referenzspannung Ur dem Basisanschluß des Transistors T2 auch die zum Steuersignal $u_S$ inverse Spannung zugeführt werden. Stammt das Steuersignal $u_S$ beispielsweise von dem einen Ausgang des mittels eines Flipflops aufgebauten Zeitentscheiders, dann kann vom inversen Ausgang dieses Flipflops das inverse Steuersignal entnommen und anstelle der Referenzspannung Ur zur Steuerung des Coderegelverletzungsprüfers mitverwendet werden.

Der Coderegelverletzungsprüfer nach der Fig. 3 stellt im Hinblick auf den Eingang El und die Ausgänge eine Logikschaltung dar, deren Ausgang die beiden Zustände 0 und 1 annehmen kann, wobei der Zustand 1 dem höheren Potential entspricht. Durch den Differenzverstärker aus den Transistoren Tl und T2 wird durch Vergleich zwischen Steuersignal $u_S$ und Referenzspannung Ur der logische Pegel des Steuersignals festgestellt. Bei einer Steuerspannung $u_S = 0$ leitet der Transistor T2 und speist den aus den Transistoren T3 und T4 gebildeten Differenzverstärker mit dem Strom I. Damit ist als Referenzspannung für das Eingangssignal an Eingang E1 der untere Schwellenwert UO wirksam. Unterschreitet in diesem Falle die Eingangsspannung diesen Schwellenwert UO, dann sperrt der Transistor T3 und es entsteht an Ausgang A22 ein Fehlersignal $u_F = 1$. Ist das Steuersignal $u_S = 1$, dann leitet der Transistor T1. Damit fließt der Strom I über den Kollektor des Transistors T1 zu dem aus den Transistoren T5 und T6 gebildeten Differenzverstärker, so daß in diesem Falle als Referenzspannung für das Eingangssignal die obere Schaltschwelle U1 des Schmitt-Triggers ST wirksam ist. Ein Fehlersignal am Ausgangsanschluß A22 wird dann erzeugt, wenn die Eingangsspannuung die Spannung U1 überschreitet, da in diesem Falle der Transistor T6 gesperrt wird.

Zusätzlich ist dem Transistor T1 emitter- und kollektorseitig der Transistor Tll und dem Transistor T2 der Transistor T21 parallelgeschaltet. Diese beiden Transistoren T11 und T21 dienen der Zuführung von Prüfimpulsen, so daß die Basisanschlüsse P1, P2 dieser Transistoren den Anschlüssen Pi nach der Fig. 1 entsprechen. Wird die angelegte Spannung am Anschluß P1 positiver als das Steuersignal $u_S = 1$, dann fließt der Strom I ständig durch den aus den Transistoren T5 und T6 gebildeten Differenzverstärker. In diesem Falle erzeugen alle positiven

**0 092 215**

Eingangsimpulse am Entscheidereingang Fehlerimpulse am Ausgang A22, solange dieser positive Zustand des Signals an Pa andauert. Entsprechend bewirkt ein positives Signal am Anschluß P2, daß der Strom I durch den aus den Transistoren T3 und T4 gebildeten Differenzverstärker fließt. Dann erzeugen alle negativen Eingangsimpulse am Ausgang A22 Fehlerimpulse $u_F = 1$.

Die Dauer der erzeugten Fehlerimpulse entspricht etwa der Dauer der Impulse des digitalen Übertragungssignals. Bei Übertragungssystemen mit sehr hohen Übertragungsgeschwindigkeiten ergeben sich dadurch sehr kurze Fehlerimpulse, deren Übertragung zu einer auswertenden Stelle und deren Auswertung vergleichsweise aufwendig ist. Bei hochratigen Übertragungssystemen ist es deshalb vorteilhaft, die Fehlerimpulse vor der Übertragung beispielsweise durch ein Monoflop zu verbreitern.

**Patentansprüche**

1. Regenerator für digitale Signale mit einem eingangsseitigen Schmitt-Trigger (ST) und einem an dessen Ausgang angeschalteten Zeitentscheider (ZE), dadurch gekennzeichnet, daß die digitalen Signale im AMI-Code vorliegen und daß zur Betriebsüberwachung ein Coderegelverletzumgsprüfer (VM) für den AMI-Code vorgesehen ist, daß der Coderegelverletzungsprüfer einen, durch ein gegenüber dem Eingangssignal um eine Schrittperiode verzögertes Schmitt-Triggerausgangssignal gesteuerten Umschalter (TI, T2) und zwei von diesem aktivierte Schwellenwertvergleicher (T3, T4; T5, T6) enthält, von denen der eine einen Vergleich des Eingangssignals mit der unteren Schwellenspannung (UO) und der andere mit der oberen Schwellenspannung (U1) des Schmitt-Triggers (ST) durchführt, daß mit dem Signaleingang (ER) des Regenerators sowohl ein Eingang des Schmitt-Triggers (ST) als auch ein erster Eingang (E1) des Coderegelverletzungsprufers (VM) verbunden sind daß ein zweiter Eingang (E2) des Coderegelverletzungsprüfers (VM) an den auf den Schmitt-Triggerausgang folgenden Weg für die digitalen Signale über ein Verzögerungsglied (VL) angeschlossen ist und daß am Ausgang des Coderegelverletzungsprüfers (VM) bei festgestellten Coderegelverletzungen jeweils ein entsprechendes Signal auftritt.

2. Regenerator nach Patentanspruch 1, dadurch gekennzeichnet, daß der Coderegelverletzungsprüfer einen ersten Transistor (T1) und einen zweiten Transistor (T2) enthält, deren Emitteranschlüsse miteinander und mit einer Stromquelle (I) verbunden sind, daß der Basisanschluß des ersten Transistors (T1) den zweiten Eingang (E2) des Coderegelverletzungsprüfers (VM) bildet, daß der Basisanschluß des zweiten Transistors (T2) mit einer Referenzspannungsquelle (Ur) und der Kollektoranschluß dieses Transistors (T2) mit den zusammengeführten Emitteranschlüssen eines dritten und eines vierten Transistors (T3, T4) verbunden ist, daß der Kollektoranschluß des ersten Transistors (T1) mit den zusammengeführten Emitteranschiüssen eines fünften und eines sechsten Transistors (T5, T6) verbunden ist, daß die zusammengeführten Basisanschlüsse des dritten und des fünften Transistors (T3, T5) den ersten Eingang (E1) des Coderegelverletzungsprüfers bilden, daß die Kollektoranschlüsse des vierten und des fünften Transistors (T4, T5) miteinander, mit einem Ausgangsanschluß (A21) und über einen ersten Widerstand (R1) mit Bezugspotential verbunden sind, daß die Kollektoranschlüsse des dritten und des sechsten Transistors (T3, T6) miteinander, mit einem weiteren Ausgangsanschluß (A22) und über einen zweiten Widerstand (R2) mit Bezugspotential verbunden sind, daß der Basisanschluß des vierten Transistors (T4) mit einer Quelle für eine Spannung (UO) entsprechend der negativen Schaltschwelle des verwendeten Schmitt-Triggers (ST) und der Basisanschluß des sechsten Transistors (T6) mit einer Quelle für eine Spannung (U1) entsprechend der positiven Schaltschwelle des Schmitt-Triggers (ST) verbunden

3. Regenerator nach Patentanspruch 2, dadurch abgewandelt, daß der Basisanschluß des zweiten Transistors (T2) mit einer Quelle verbunden ist, die ein zu dem am zweiten Eingang (E2) anliegenden Steuersignal ($u_S$) inverses Steuersignal ($\bar{u}_S$) abgibt.

4. Regenerator nach Patentansprüchen 2 oder 3, dadurch gekennzeichnet, daß zur Zuführung von Prüfimpulsen dem ersten Transistor (TI) emitter- und kollektorseitig ein weiterer Transistor (T11) und auch dem zweiten Transistor (T2) emitterund kollektorseitig ein weiterer Transistor (T21) parallelgeschaltet sind umd daß einem der beiden Basisanschlüsse (P1, P2) dieser Transistoren (T11, T21) eine die obere Umschaltschwelle (U1) des SchmittTriggers (ST) überschreitende Spannung oder eine die untere Schaltschwelle (UO) des Schmitt-Triggers (ST) unterschreitende Spannung zugeführt wird.

5. Regenerator nach Patentanspruch 1, dadurch gekennzeichnet, daß als Verzögerungsglied (VL) ein Logikgatter vorgesehen ist.

6. Regenerator nach Patentanspruch 1, dadurch gekennzeichnet, daß mit einem Ausgang (A2) des Coderegelverletzungsprüfers (VM) ein Monoflop verbunden ist.

7. Regenerator nach Patentanspruch 1 oder 5, dadurch gekennzeichnet, daß bei einer, ohne Einsatz eines Verzögerungsgliedes eine Schrittdauer der digitalen Signale überschreitenden Signallaufzeit zwischen dem Eingang (ER) des Regenerators und dem zweiten Eingang (E2) des Coderegelverletzungsprüfers das dem zweiten Eingang (E2) des Coderegelverletzungsprüfers vorgeschaltete Verzögerungsglied (VL) entfällt und zwischen Eingang (ER) des Regenerators und erstem Eingang (E1) des Coderegelverletzungsprüfers ein Verzögerungsglied eingeschaltet ist.

8. Regenerator nach Patentanspruch 1, dadurch gekennzeichnet, daß das Verzögerungsglied (VL) an einen zusätzlichen Ausgang (AL) des Zeitentscheiders (ZE) angeschlossen ist und daß dieser Ausgang wahlweise mit einem Eingang oder einem Ausgang des Zeitentscheiders verbindbar ist.

5

**Claims:**

1. A regenerator for digital signals, with an input-end Schmitt trigger (ST), and with a time decision device (SE) which is connected to the output of the Schmitt trigger, <u>characterised in</u> that the digital signals occur in the AMI-code, and that for the monitoring of the operation a code violation monitor (VM) is provided for the AMI-code, that the code violation monitor includes a change-over switch (T1,T2) which is controlled by a Schmitt trigger output signal delayed by one element period in comparison to the input signal, and further includes two threshold value comparators (T3,T4;T5,T6) which are activated by said change-over switch and of which the first compares the input signal with the lower threshold voltage (UÖ) and the other compares the input signal with the upper threshold voltage (UI) of the Schmitt trigger (ST), that the signal input (ER) of the regenerator is connected both to an input of the Schmitt trigger (ST) and to a first input (EI) of the code violation monitor (VM), that a second input (E2) of the code violation monitor (VM) is connected via a delay element (VL) to the path for the digital signals which follow the Schmitt trigger output, and that whenever code rule infringements are established an appropriate signal occurs at the output of the code violation monitor (VM).

2. A regenerator as claimed in patent claim 1, <u>characterised</u> in that the code violation monitor includes a first transistor (TI) and a second transistor (T2) emitter terminals are connected to one another and current source (I), that the base terminal of the first transistor (TI) forms the second input (E2) of the code violation monitor (VM), that the base terminal of the second transistor (T2) is connected to the combined emitter terminals of a third and a fourth transistor (T3,T4), that the collector terminal of the first transistor (T1) is connected to the combined emitter terminals of a fifth and sixth transistor (T5,T6), that the combined base terminals of the third and fifth transistors (T3,T5) form the first input (E1) of the code violation monitor, that the collector terminals of the fourth and fifth transistors (T4,T5) are connected to one another, to an output terminal (A21), and, via a first resistor (R1) to reference potential, that the collector terminals of the third and sixth transistors (T3,T6) are connected to one another, to a further output terminal (A22), and, via a second resistor (R2), to reference potential, that the base terminal of the fourth transistor (T4) is connected to a source for a voltage (UO) corresponding to the negative switching threshold of the Schmitt trigger (ST) which is used, and the base terminal of the sixth transistor (T6) is connected to a source for a voltage (U1) corresponding to the positive switching threshold of the Schmitt trigger (ST).

3. A regenerator as claimed in patent claim 2, <u>modified</u> in that the base terminal of the second transistor (T2) is connected to a source which emits a control signal (u_S) which is inverse to the control signal (u_S) which occurs at the second input (E2).

4. A regenerator as claimed in patent claims 2 or 3, characterised in that for the supply of test pulses, the first transistor (T1) is connected in parallel on its emitter and collector side to a further transistor (T11), and the second transistor (T2) is also connected in parallel on its emitter and collector side to a further transistor (T21), and that one of the two base terminals (P1, P2) of these transistors (T11,T21) is supplied with a voltage which exceeds the upper switch-over threshold (U1) of the Schmitt trigger (ST), or with a voltage which falls below the lower switching threshold (UO) of the Schmitt trigger (ST).

5. A regenerator as claimed in patent claim 1, <u>characterised</u> in that a logic gate is provided by way of delay element (VL).

6. A regenerator as claimed in patent claim 1, <u>characterised</u> in that a monoflop is connected to an output (A2) of the code violation monitor (VM).

7. A regenerator as claimed in patent claims 1 or 5, <u>characterised</u> in that when the signal transit time between the input (ER) of the regenerator and a second input (E2) of the code violation monitor exceeds the duration of one element of the digital signals, when no delay element is used, then the delay element (VL) which ist connected preceding the second input (E2) of the code violation monitor is dispensed with and a delay element is connected between the inputs (ER) of the regenerator and the first input (EI) of the code violation monitor.

8. A regenerator as claimed in patent claim 1, characterised in that the delay element (VL) is connected to an additional output (AL) of the time decision device (ZE), and that this output can be selectively connected to an input or an output of the time decision device.

**Revendications**

1. Régénérateur pour signaux numériques comportant un déclencheur de Schmitt (ST) situé du côté entrée et un circuit de décision temporelle (ZE), raccordé à la sortie du déclencheur, caractérisé par le fait que les signaux numériques sont présents conformément au code AMI et que pour le contrôle du fonctionnement, il est prévu un dispositif (VM) de contrôle de violations de la règle du code pour le code AMI, que le dispositif de contrôle de violations de la règle du code contient un commutateur (T1,T2) commandé par un signal de sortie du déclencheur de Schmitt, retardé d'un cycle de pas des signaux par rapport au signal d'entree, et deux comparateurs à valeur de seuil (T3,T4 ; T5,T6) actionnés par ce commutateur et dont l'un réalise une comparaison entre le signal d'entrée et la tension de seuil inférieure (UO) et dont l'autre réalise une comparaison entre le signal d'entrée et la tension de seuil supérieure (U1) du déclencheur de Schmitt (ST), qu'aussi bien une entrée du déclencheur de Schmitt (ST) qu'une première entrée (E1) du dispositif (VM) de contrôle de violations de la règle du code sont reliées à l'entrée des signaux (EA) du régénerateur, qu'une seconde entrée (E2) du dispositif (VM) de contrôle de violations de la règle du code est raccordee au moyen d'un circuit de retardement (VL) à la voie de circulation des signaux numériques, qui est raccordée en aval de la sortie du déclencheur de Schmitt, et qu'un signal correspondant apparaît respectivemer.t à la sortie du dispositif (VM) de contrôle de violations de la règle du code, dans le cas où de telles violations sont déterminées.

2. Régénérateur suivant la revendication 1, caractérisé par le fait que le dispositif de contrôle de violations de la règle du code contient un premier transistor (Tl) et un second transistor (T2), dont les bornes d'émetteur sont reliées entre elles et à une source de courant (I), que la borne de base du premier transistor (T1) forme la seconde entrée (E2) du dispositif (VM) de contrôle de violations de la règle du code, que la borne de base du second transistor (T2) est reliée à une source de tension de référence (Ut) et que la borne de collecteur de ce transistor (T2) est reliée aux bornes d'émetteur interconnectées d'un troisième et d'un quatrième transistors (T3,T4), que la borne de collecteur du premier transistor (T1) est reliée aux bornes d'émetteur interconnectées d'un cinquième et d'un sixième transistors (T5, T6), que les bornes de base interconnectées du troisième et du cinquième transistors (T3,T5) forment la première entrée (El) du dispositif de contrôle de violations de la règle du code, que les bornes de collecteur du quatrième et du cinquieme transistors (T4,T5) sont reliées entre elles, à une borne de sortie (A21) et, par l'intermédiaire d'une première résistance (R1), au potentiel de référence, que les bornes de collecteur du troisième et du sixièmè transistors (T3,T6) sont reliées entre elles, à une autre borne de sortie (A22) et, par l'intermédiaire d'une seconde résistance (R2) au potentiel de référence et que la borne de base du quatrième transistor (T4) est reliée à une source délivrant une tension (UO) conformément au seuil de commutation négatif du déclencheur de Schmitt (ST) utilisé, et que la borne de base du sixième transistor (T6) est reliée à une source délivrant une tension (U1) conformément au seuil de commutation positif du déclencheur de Schmitt (ST).

3. Régénérateur suivant la revendication 2, caractérisé par le fait que la borne de base du second transistor (T2) est reliée à une source qui délivre un signal de commande ($\bar{u}_S$) inverse du signal de commande ($u_S$) appliqué à la seconde entrée (E2).

4. Régénérateur suivant la revendication 2 ou 3, caractérisé par le fait que pour réaliser l'envoi d'impulsions de contrôle, un autre transistor (T11) est branché en parallèle avec le premier transistor (T1), entre le côté émetteur et le côté collecteur et qu'en outre un autre transistor (T21) est également branché en parallèle avec le second transistor (T2) entre l'émetteur et le collecteur, et qu'une tension dépassant le seuil supérieur de commutation (UI) du declencheur de Schmitt (ST) ou une tension inférieure au seuil inférieur de commutation (UO) du déclencheur de Schmitt (ST) est envoyée à l'une des deux bornes de base (P1,P2) de ces transistors (T11,T21).

5. Régénérateur suivant la revendication 1, caractérisé par le fait qu'une porte logique est prévue en tantque circuit de retardement, (VL).

6. Régénérateur suivant la revendication 1, caractérisé par le fait qu'une bascule monostable est reliée à une sortie (A2) du dispositif (VM ) de contrôle de violations de la règle du code.

7. Régénérateur suivant la revendication 1 ou 5, caractérisé par le fait que dans lecas d'un temps de transit des signaux, dépassant la durée d'un pas des signaux numériques sans l'utilisation d'un organe de retardement, entre l'entrée (E1) du régénérateur et la seconde entrée (E2) du dispositif de contrôle de violations de la règle du code, le circuit de retardement (VL), branché en amont de la seconde entrée (E2) du dispositif de contrôle de violations de la regle du code, est supprimé et qu'un circuitde retardement est branché entre l'entrée (ET) du régénérateur et la première entrée (E1) du dispositif de contrôle de violations de la regle du code.

8. Régénérateur suivant la revendication 1, caractérisé par le fait quele circuit de retardement (VL) est raccordé à une sortie supplémentaire (AL) du circuit de décision temporelle (ZE) et que cette sortie peut être reliée au choix à une entrée ou à une sortie du circuit de décision temporelle.

# FIG 1

# FIG 2

# FIG 3